# EUROPEAN PATENT APPLICATION

(11) **EP 4 418 681 A1**
(43) Date of publication of application: **21.08.2024**
(21) Application number: 23887161.0
(22) Date of filing: 15.11.2023
(51) Int. Cl.: H04R 1/02, H04R 1/40, H04R 1/28, H04N 5/64

(54) **SPEAKER ASSEMBLY AND DISPLAY DEVICE COMPRISING SAME**

(30) Priority: 16.11.2022 KR 20220153448
(71) Applicant: LG Electronics Inc., Seoul 07336 (KR)
(72) Inventor: The designation of the inventor has not yet been filed
(74) Representative: Vossius & Partner Patentanwälte Rechtsanwälte mbB
(86) International application number: PCT/KR2023/018316
(87) International publication number: WO 2024/106927

(57) **Abstract**

A speaker assembly and a display device including the same are disclosed. The speaker assembly may include: a speaker; a fixing holder coupled to a pole which is elongated, which is movable along a longitudinal direction of the pole, and which fixes the speaker to the pole, the fixing holder including a seating surface on which the speaker is seated; and a sound absorbing material positioned at the fixing holder.

## Description

### [TECHNICAL FIELD]

The present disclosure relates to a speaker assembly and a display device including the speaker assembly.

### [BACKGROUND ART]

With the development of information society, there has been a growing demand for various types of display devices. In order to meet such demand, various display devices, such as a liquid crystal display (LCD), a plasma display panel (PDP), an electro luminescent display (ELD), a vacuum fluorescent display (VFD), an organic light emitting diode (OLED), and the like, have been developed and used.

Among them, an LCD panel includes a TFT substrate and a color substrate that face each other with a liquid crystal layer interposed therebetween, so as to display an image using light provided from a backlight unit. Meanwhile, an OLED panel can display an image by depositing a self-luminescent organic layer on a substrate having a transparent electrode formed thereon.

Recently, numerous research has been conducted on a structure that can freely adjust the angle or position of a display.

In addition, various research has been conducted on a structure that can address the issue of sound not being heard clearly in a large space.

### [DETAILED DESCRIPTION OF INVENTION]

### [TECHNICAL PROBLEMS]

It is an objective of the present disclosure to solve the above and other problems.

Another objective may be to provide a display device including a stand for supporting a head.

Another objective may be to provide a display device equipped with a forward-facing speaker.

Another objective may be to provide a display device equipped with a companion speaker.

Another objective may be to provide a display device including a stand for supporting a head and a speaker.

Another objective may be to provide a structure that allows a speaker to be attachable to and detachable from a display device.

### [TECHNICAL SOLUTION]

In accordance with an aspect of the present disclosure to achieve the above or other objectives, a speaker assembly includes: a speaker; a fixing holder coupled to a pole which is elongated, which is movable along a longitudinal direction of the pole, and which fixes the speaker to the pole, the fixing holder including a seating surface on which the speaker is seated; and a sound absorbing material positioned at the fixing holder.

### [EFFECT OF INVENTION]

A speaker assembly and a display device including the same according to the present disclosure has the following effects.

According to at least one of the embodiments of the present disclosure, it is possible to provide a display device including a stand for supporting a head.

According to at least one of the embodiments of the present disclosure, it is possible to provide a display device equipped with a forward-facing speaker.

According to at least one of the embodiments of the present disclosure, it is possible to provide a display device equipped with a companion speaker.

According to at least one of the embodiments of the present disclosure, it is possible to provide a display device including a stand for supporting a head and a speaker.

According to at least one of the embodiments of the present disclosure, it is possible to provide a structure that allows a speaker to be attachable to detachable from a display device.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### [BRIEF DESCRIPTION OF THE DRAWING]

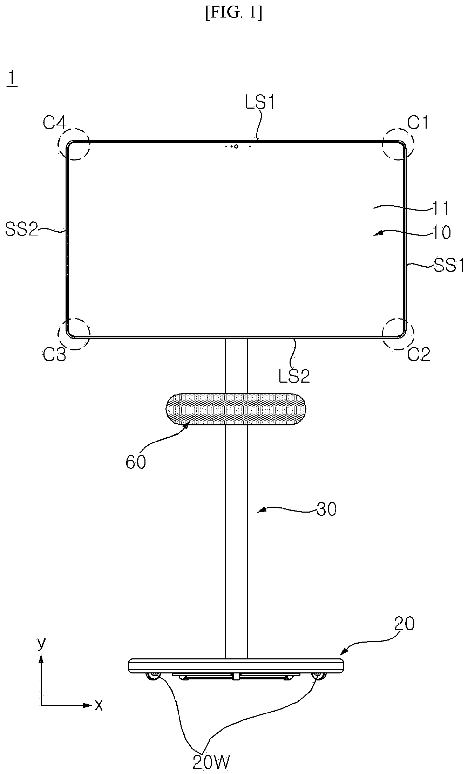

FIGS. 1 to 18 are diagrams illustrating examples of a speaker assembly and/or a display device including the speaker assembly according to embodiments of the present disclosure.

### [MODE FOR CARRYING OUT THE INVENTION]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand the technical idea of the present disclosure and it should be understood that the idea of the present disclosure is not limited by the accompanying drawings. The idea of the present disclosure should be construed to extend to any alterations, equivalents, and substitutes besides the accompanying drawings.

It will be understood that although the terms "first", "second", etc. may be used herein to describe various elements, these elements should not be limited by these terms. These terms are only used to distinguish one element from another.

It will be understood that when a component is referred to as being "connected to" or "coupled to" another component, it may be directly connected to or coupled to another component, or intervening components may be present. In contrast, when a component is referred to as being "directly connected to" or "directly coupled to" another component, there are no intervening components present.

As used herein, a singular representation is intended to include a plural representation unless the context clearly indicates otherwise.

It will be understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The directions "up (U)", "down (D)", "left (Le)", "right (Ri)", "front (F)", and "rear (R)" shown in the drawings are only for the convenience of description, and the technical concept disclosed in the specification is not limited by these directions.

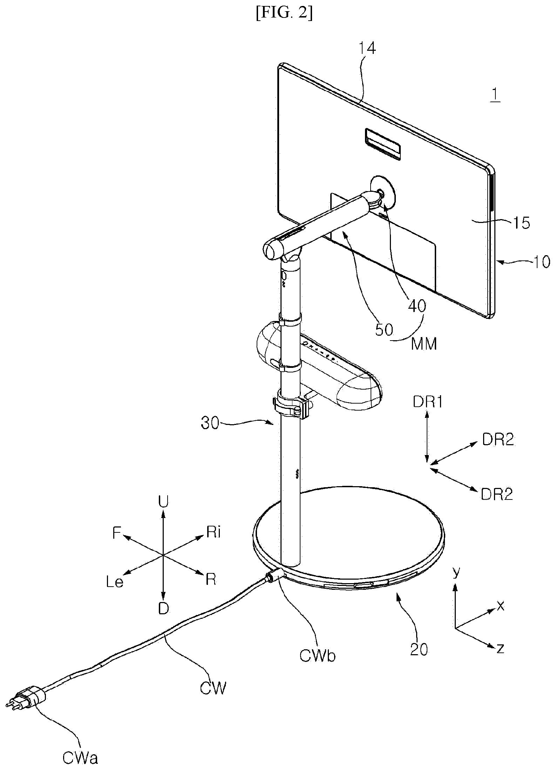

Referring to FIGS. 1 and 2, a display device 1 may include a head 10. The head 10 may display an image. The head 10 may be referred to as a display 10 or a display unit 10.

The head 10 may include a first long side LS1, a second long side LS2 opposite the first long side LS1, a first short side SS1 adjacent to the first long side LS1 and the second long side LS2, and a second short side SS2 opposite the first short side SS1. For the convenience of explanation, it is illustrated and described that lengths of the first and second long sides LS1 and LS2 are greater than lengths of the first and second short sides SS1 and SS2. However, the lengths of the first and second long sides LS1 and LS2 may be substantially equal to the lengths of the first and second short sides SS1 and SS2.

A direction parallel to the short sides SS1 and SS2 of the head 10 may be referred to as a first direction DR1 or an up-and-down direction. A direction parallel to the long sides LS1 and LS2 of the head 10 may be referred to as a second direction DR2 or a left-and-right direction. A direction perpendicular to the long sides LS1 and LS2 and the short sides SS1 and SS2 of the head 10 may be referred to as a third direction DR3 or a front-and-rear direction.

A direction in which the head 10 displays an image may be referred to as a front (F, z), and a direction opposite to the front may be referred to as a rear (R). The first short side SS1 may be referred to as a left side (Le, x). The second short side SS2 may be referred to as a right side (Ri). The first long side LS1 may be referred to as an upper side (U, y). The second long side LS2 may be referred to as a lower side (D).

The first long side LS1, the second long side LS2, the first short side SS1, and the second short side SS2 may be referred to as edges of the head 10. In addition, points where the first long side LS1, the second long LS2, the first short side SS1, and the second short side SS2 meet one another may be referred to as corners.

A point where the first short side SS1 and the first long side LS1 meet may be referred to as a first corner C 1. A point where the first short side SS1 and the second long side LS2 meet may be referred to as a second corner C2. A point where the second short side SS2 and the second long side LS2 meet may be referred to as a third corner C3. A point where the second short side SS2 and the first long side LS1 meet may be referred to as a fourth corner

C4.

The display device 1 may include a base 20. The base 20 may generally have the shape of a flat cylinder. The base 20 may be placed on the surface.

The display device 1 may include a pole 30. The pole 30 may extend vertically. A lower end of the pole 30 may be coupled to the base 20. The pole 30 may be adjacent to the periphery of the base 20.

The display device 1 may include a motion module MM. The motion module MM may extend in a direction intersecting the pole 30. One side (or a first side) of the motion module MM may be coupled to an upper end of the pole 30. The other side (of a second side) of the motion module MM may be coupled to a rear side of the head 10. A rotatable connector 40 may be coupled to a rear surface of the head 10, and a support arm 50 may connect the head 10 and the pole 30. The rotatable connector 40 may be referred to as a connector 40. The base 20, the pole 30, the support arm 50, and the rotatable connector 40 may be collectively referred to as a stand (20, 30, 50, 40).

Accordingly, the head 10 may be supported by the motion module MM, the pole 30, and the base 20, and may be spaced upward from the surface.

The display device 1 may include a speaker assembly 60. The speaker assembly 60 may be coupled to the pole 30. The speaker assembly 60 may be coupled to the pole 30 so as to be spaced upward from the surface. The speaker assembly 60 may be electrically connected to the display device 1 so as to output sound. The speaker assembly 60 may output (or radiate) sound forward.

Meanwhile, a power cable CW may be connected to an external power source. A plug CWa of the power cable CW may be connected to a concentric plug, and a jack CWb of the power cable CW may be connected to the base 20. A battery (not shown) may be installed at the base 20, the pole 30, and/or the head 10, and may be charged or discharged by power supplied through the power cable CW.

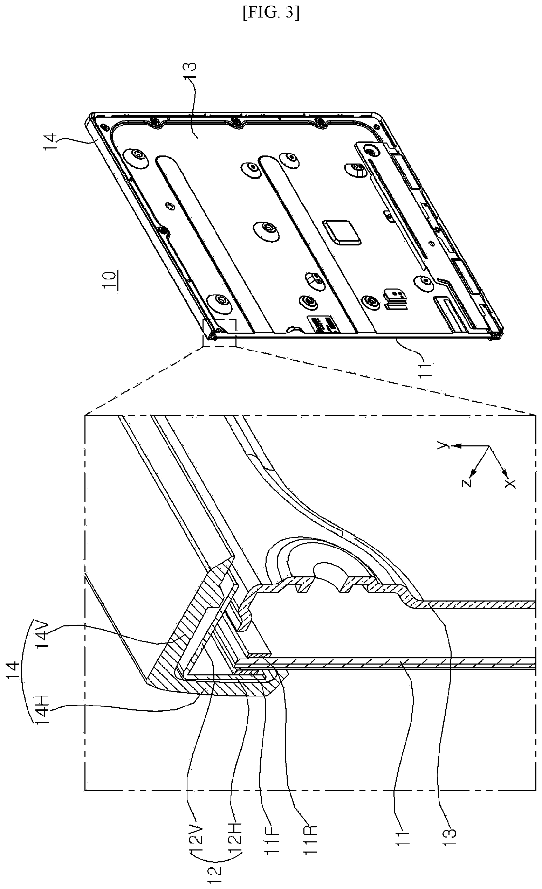

Referring to FIGS. 2 and 3, the head 10 may include a display panel 11, a middle cabinet 12, a frame 13, an end frame 14, and a back cover 15.

The display panel 11 may define a front surface of the head 10. For example, the display panel 11 may be an OLED panel, an LCD panel, or an LED panel. The display panel 11 may include a plurality of pixels to output an image while controlling color, brightness, and chroma of each pixel. The display panel 11 may be divided into an active area in which an image is displayed and a de-active area in which no image is displayed. The display panel 11 may generate light corresponding to a color of red, green, or blue in response to a control signal.

The middle cabinet 12 may extend along the periphery of the display panel 11. A horizontal portion 12H may be positioned at the front of the display panel 11. A vertical portion 12V may intersect the horizontal portion 12H. The vertical portion 12V may cover a side surface of the display panel 11. For example, the middle cabinet 12 may include a metal or plastic material. The middle cabinet 12 may be referred to as a side frame or a guide panel.

The frame 13 may be positioned at the rear of the display panel 11. Electrical components such as a printed circuit board (PCB) may be coupled to a rear surface of the frame 13. For example, the frame 13 may include a metal material. The frame 13 may be referred to as a mount plate or a module cover.

The end frame 14 may define the periphery of the head 10. A horizontal portion 14H may be positioned in front of the horizontal portion 12H of the middle cabinet 12. A vertical portion 14V may cover a side surface of the vertical portion 12V of the middle cabinet 12. For example, the end frame 14 may include a metal or plastic material.

The back cover 15 may define a rear surface of the head 10. The back cover 15 may cover the rear of the frame 13, and may be coupled to the frame 13.

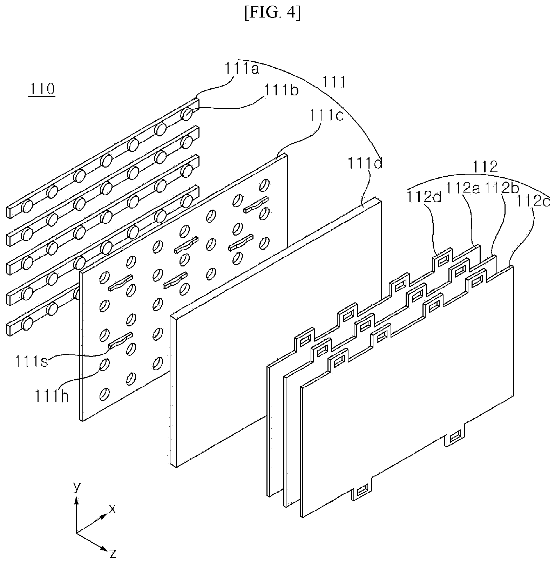

Referring to FIGS. 3 and 4, a backlight unit 110 may be positioned between the display panel 11 and the frame 13, and may be coupled to the frame 13. Here, the display panel 11 may be referred to as an LCD panel. The backlight unit 110 may include an optical layer 111 and an optical sheet 112. The optical layer 111 may include a substrate 111a, at least one light source 111b, a reflective sheet 111c, and a diffusion plate 111d.

The substrate 111a may be coupled to a front surface of the frame 13. The substrate 111a may have the shape of a plate, or may be configured as a plurality of straps vertically spaced apart from each other. At least one light source 111b may be mounted on the substrate 111a. For example, the light source 111b may include a light emitting diode (LED). An electrode pattern for connecting an adaptor to the light source 111b may be formed on the substrate 111a. The reflective sheet 111c may be positioned in front of the substrate 111a. The reflective sheet 111c may include a hole 111h in which the light source 111b is disposed. The diffusion plate 111d may be positioned in front of the reflective sheet 111c. A spacer 111s may support a rear surface of the diffusion plate 111d between the reflective sheet 111c and the diffusion plate 111d.

The optical sheet 112 may be positioned in front of the diffusion plate Illd. A rear surface of the optical sheet 112 may be in close contact with the diffusion plate 111d, and a front surface of the optical sheet 112 may be in close contact with or adjacent to a rear surface of the display panel 11. The optical sheet 112 may include at least one of a diffusion sheet or a prism sheet. A coupling portion 112d may be formed on at least one edge of the optical sheet 112.

Accordingly, light of the light source 111b may be provided to the display panel 11 through the diffusion plate 111d and the optical sheet 112. Meanwhile, the display panel 11 of the present disclosure may be an OLED panel that does not require the backlight unit 110 described above or another type of panel.

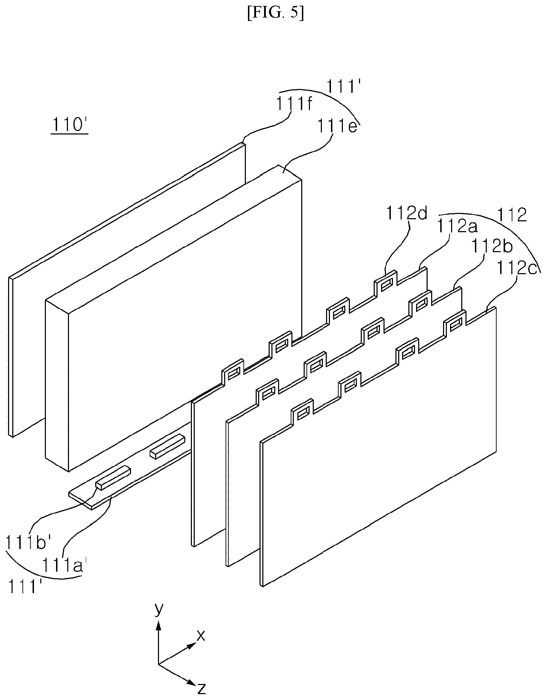

Referring to FIG. 3 and FIG. 5, a backlight unit 110' may be positioned between the display panel 11 and the frame 13, and may be coupled to the frame 13. Here, the display panel 11 may be referred to as an LCD panel. The backlight unit 110' may include an optical layer 111' and an optical sheet 112. The optical layer 111' may include a substrate 111a', at least one light source 111b', a reflective sheet 111f, and a light guide plate 111e. The light guide plate 111e may be positioned between the frame 13 and the reflective sheet 112, and may be supported by the frame 13.

The substrate 111a' may be adjacent to the periphery of the light guide plate 111e, and may be coupled to the frame 13. At least one light source 111b' may be mounted on the substrate 111a'. For example, the light source 111b' may include a light emitting diode (LED). An electrode pattern for connecting an adaptor to the light source 111b' may be formed on the substrate 111a'. The reflective sheet 111f may be positioned between the frame 13 and the light guide plate 111e, and may be supported by the frame 13.

Accordingly, light of the light source 111b' may be provided to the display panel 11 through the light guide plate 111e and the optical sheet 112. Meanwhile, the display panel 11 of the present disclosure may be an OLED panel that does not require the backlight unit 110' described above or another type of panel.

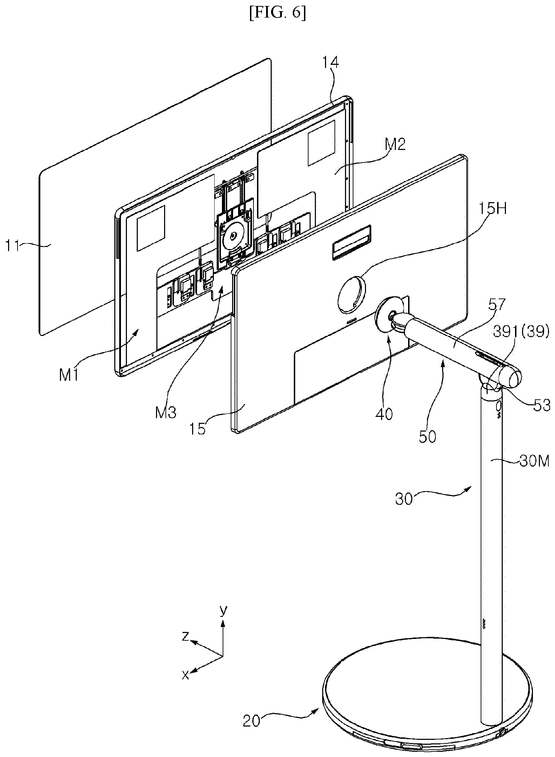

Referring to FIG. 6, a plurality of electrical components M1, M2, and M3 may be positioned between the display panel 11 and the back cover 15. For example, the plurality of electrical components M1, M2, and M3 may be mounted on a front surface of the back cover 15. As another example, the plurality of electrical components M1, M2, and M3 may be mounted on the front surface or the rear surface of the frame 13 (see FIG. 3) positioned in front of the back cover 15. An example of the plurality of electrical components M1, M2, and M3 will be described below.

A power supply board M1 may provide power to each of the components of the display device. For example, a rechargeable battery may be mounted to the head 10, the pole 30, and/or the base 20, and may be connected to the power supply board M1. A main board M2 may control the display device. A timing controller board (TC) may be electrically connected to the display panel 11 through a cable (not shown), and may provide an image signal to the display panel 11.

A coupling hole 15H may be formed in a central portion of the back cover 15, and may be aligned with the rotatable connector 40. A portion of the rotatable connector 40 may pass through the coupling hole 15H. The rotatable connector 40 may be detachably coupled to the back cover 15. Alternatively, the rotatable connector 40 may be coupled to the back cover 15 through a fastening member such as a screw. Alternatively, the rotatable connector 40 may be coupled to the back cover 15 through a magnetic member such as a magnet.

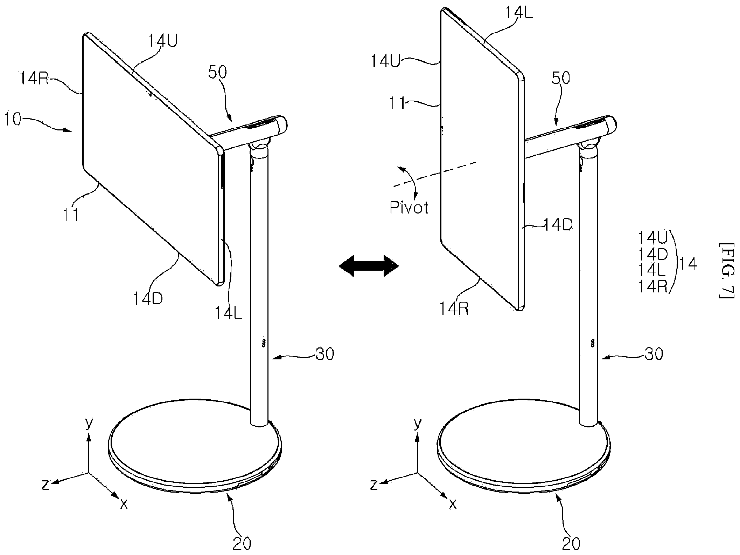

Referring to FIG. 7, the head 10 may be spaced upward from the base 20. A user may pivot the head 10. A pivot axis may be defined as an axis passing through a center of the head 10 and perpendicular to the head 10. Referring to the left drawing of FIG. 7, the head 10 may be in landscape mode. Referring to the right drawing of FIG. 7, the head 10 may be in portrait mode.

Referring to FIG. 1, FIG. 2, and FIG. 8, the display device 1 may include a speaker assembly 60. The speaker assembly 60 may be coupled to the pole 30. The speaker assembly 60 may be coupled to the pole 30 under the head 10. The speaker assembly 60 may provide sound in a forward direction of the display device 1.

The speaker assembly 60 may include a speaker 61. The speaker 61 may be coupled to a fixing holder 62 described hereinafter. The speaker 61 may be detachably coupled to the fixing holder 62 described hereinafter. The speaker 61 may convert an electrical audio signal into sound waves. The speaker 61 may be electrically connected to the display device 1 to be used. Alternatively, the speaker 61 may be used alone, independently of the display device 1. For example, the speaker 61 may be a companion speaker.

The speaker assembly 60 may include a fixing holder 62. The fixing holder 62 may be coupled to the pole 30. The fixing holder 62 may be fixed to a specific position on the pole 30. The fixing holder 62 may support the speaker 61. The fixing holder 62 may allow the speaker 61 to be spaced apart from the surface.

The speaker assembly 60 may include a cable holder 63. The cable holder 63 may be coupled to the pole 30. The cable holder 63 may include a ring body 631 that surrounds an outer circumferential surface of the pole 30, and a bending portion 632 formed in such a manner that at least a portion of the ring body 631 is bent. The ring body 631 may have a ring shape, so that the pole 30 may be inserted therein. The ring body 631 may have an opened circle shape. An opening of the ring body 631 may be disposed opposite the bending portion 632 with respect to the pole 30. For example, the opening of the ring body 631 may be open toward the front, and the bending portion 632 may protrude toward the rear. At least a portion of the ring body 631 may be bent in a radial direction of the pole 30 to form the bending portion 632. At least a portion of the ring body 631 may be pressed in the radial direction of the pole 30 to form the bending portion 632. The bending portion 632 may protrude in the radial direction of the pole 30. The bending portion 632 and the outer circumferential surface of the pole 30, when combined together, may form a hole, and a cable may be disposed in the hole between the bending portion 632 and the pole 30. The ring body 631 and the bending portion 632 may be formed as one body.

For example, the cable holder 63 may be made of a plastic material having elasticity. The cable holder 63 may be coupled to or removed from the pole 30 through the opening of the ring body 631.

The cable holder 63 may include a plurality of cable holders 63. The plurality of cable holders 63 may be spaced apart from each other along a longitudinal direction of the pole 30. The cable holder 63 may be coupled to the pole 30, above the fixing holder 62. The cable holder 63 may be coupled to the pole 30, below the fixing holder 62. Part of the plurality of cable holders 63 may be positioned above the fixing holder 62, and the remaining part of the plurality of cable holders 63 may be positioned below the fixing holder 62.

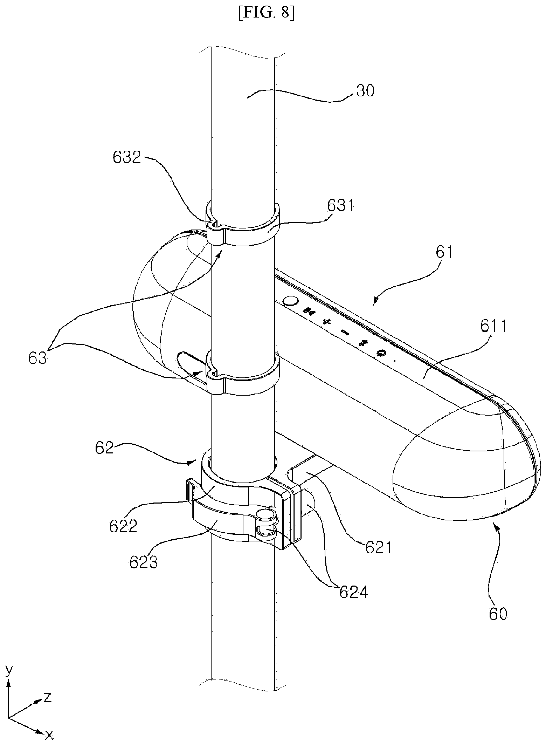

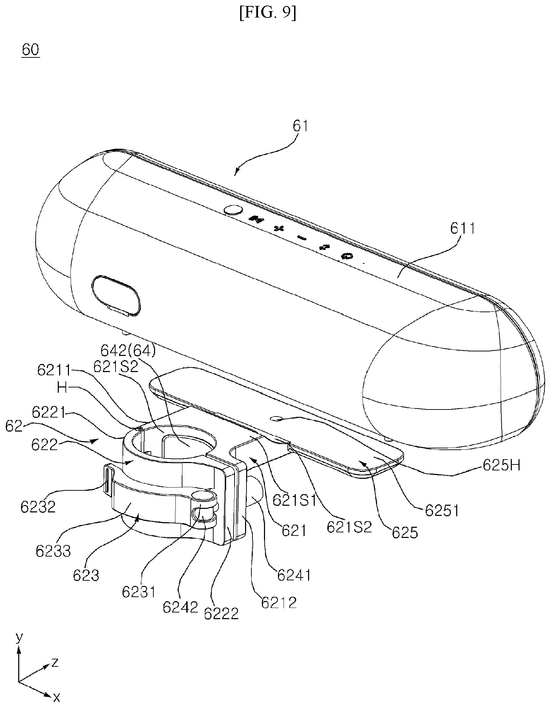

Referring to FIGS. 8 and 9, the fixing holder 62 may include a front holder 621. The front holder 621 may surround a portion of an outer circumference of the pole 30. An inner surface 621S2 of the front holder 621 may come in contact with the outer circumference of the pole 30. The front holder 621 may extend in a direction perpendicular to the longitudinal direction of the pole 30. The front holder 621 may extend along the radial direction of the pole 30, and may extend forward of the display panel 11. The front holder 621 may be coupled to a support plate 625 described later. An upper surface 621S1 of the front holder 621 may be located at a higher position than an upper surface 625S1 of the support plate 625. A seating surface 621S3 of the front holder 621 may connect the upper surface 621S1 of the front holder 621 and the upper surface 625S1 of the support plate 625. The seating surface 621S3 may be referred to as a connecting surface 621S3. The seating surface 621S3 may come in contact with the speaker 61. The seating surface 621S3 may be formed as a curved surface. The seating surface 621S3 may be formed as a curved surface that is convex downward. The seating surface 621S3 may have a shape corresponding to a shape of the speaker 61 in contact with the seating surface 621S3.

The fixing holder 62 may include a rear holder 622. The rear holder 622 may surround a portion of the outer circumference of the pole 30. An inner surface 622S of the rear holder 622 may come in contact with the outer circumference of the pole 30. The rear holder 622 may extend in a direction perpendicular to the longitudinal direction of the pole 30. The rear holder 622 may extend along the radial direction of the pole 30, and may extend rearward of the display panel 11. The rear holder 622 may be coupled to the front holder 621.

A first end 6221 of the rear holder 622 may face a first end 6211 of the front holder 621. The first end 6221 of the rear holder 622 and the first end 6211 of the front holder 621 may be hingedly coupled to each other. The front holder 621 and the rear holder 622 may be hingedly coupled by a hinge pin H. For example, the first end 6211 of the front holder 621 may be provided with a groove, the first end 6221 of the rear holder 622 may be provided with a protrusion engaged with the groove of the first end 6211 of the front holder 621, and the hinge pin H may pass through the first end 6211 of the front holder 621 and the first end 6221 of the rear holder 622.

A second end 6222 of the rear holder 622 may face a second end 6212 of the front holder 621. The second end 6222 of the rear holder 622 and the second end 6212 of the front holder 621 may extend in the radial direction of the pole 30. The second end 6222 of the rear holder 622 and the second end 6212 of the front holder 621 may extend in the left-and-right direction. The second end 6222 of the rear holder 622 and the second end 6212 of the front holder 621 may be spaced apart from each other by a predetermined distance. The second end 6222 of the rear holder 622 and the second end 6212 of the front holder 621 may be coupled via a pin member 624 described later. The second end 6222 of the rear holder 622 and the second end 6212 of the front holder 621 may each have a hole through which the pin member 624 passes.

The front holder 621 and the rear holder 622, when coupled together, may form an insertion hole, and the pole 30 may be inserted into the insertion hole. The insertion hole may be surrounded by the inner surface 621S1 of the front holder 621 and the inner surface 622S1 of the rear holder 622.

The fixing holder 62 may include a pin member 624. The pin member 624 may allow the second end 6222 of the rear holder 622 and the second end 6212 of the front holder 621 to be coupled to each other. The pin member 624 may pass through the second end 6222 of the rear holder 622 and the second end 6212 of the front holder 621. The pin member 624 may include a first pin 6241 positioned on the front holder 621 side, a second pin 6242 positioned on the rear holder 622 side, and a third pin (not shown) connecting the first pin 6241 and the second pin 6242. The third pin (not shown) may pass through the second end 6222 of the rear holder 622 and the second end 6212 of the front holder 621. The first pin 6241 and the third pin (not shown) may extend in the front-and-rear direction. Here, a diameter of the first pin 6241 may be greater than a diameter of the third pin (not shown). A diameter of the second pin 6241 may be greater than a diameter of a hole formed in the second end 6212 of the front holder 621. The diameter of the third pin (not shown) may be equal to or less than the diameter of the hole formed in the second end 6212 of the front holder 621. The diameter of the third pin (not shown) may be equal to or less than a diameter of a hole formed in the second end 6222 of the rear holder 622. The second pin 6242 may extend in a direction intersecting the extension direction of the first pin 6241. The second pin 6242 may extend in the up-and-down direction. A longitudinal length of the second pin 6242 may be greater than the diameter of the hole formed in the second end 6212 of the front holder 621. The longitudinal length of the second pin 6242 may be greater than the diameter of the hole formed in the second end 6222 of the rear holder 622. A longitudinal length of the third pin (not shown) may be greater than the sum of widths of the second end 6212 of the front holder 621 and the second end 6222 of the rear holder 622.

The fixing holder 62 may include a clamp 623. The clamp 623 may be positioned on the rear holder 622 side. A first end 6231 of the clamp 623 may be coupled to the pin member 624. The first end 6231 of the clamp 623 may be coupled to the second pin 6242 of the pin member 624. The first end 6231 of the clamp 623 may be rotatably coupled about the second pin 6242. A second end 6232 of the clamp 623 may be a free end. A body 6233 between the first end 6231 and the second end 6232 of the clamp 623 may have a shape corresponding to the rear holder 622. For example, the body 6233 may have a rounded (or curved) shape convex rearward, and may contact and be fitted onto the rear holder 622.

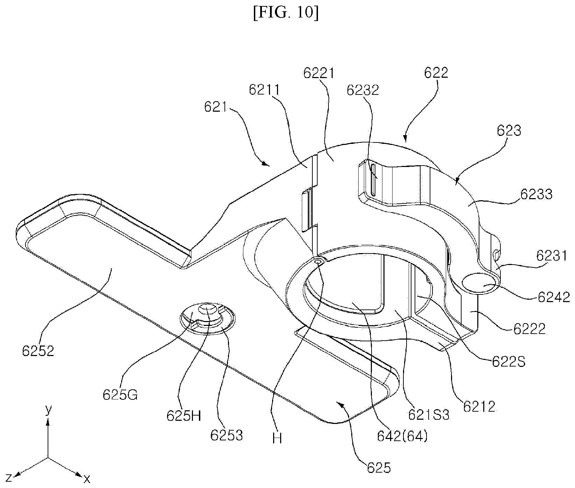

Referring to FIGS. 9 and 10, the fixing holder 62 may include a support plate 625. The support plate 625 may be coupled to the front holder 621. The support plate 625 may have a rectangular plate shape. The support plate 625 may have a rectangular plate shape parallel to the xz plane. The support plate 625 may have a rectangular plate shape with a longer side in the left-and-right direction and a shorter side in the front-and-rear direction.

The support plate 625 may include a groove 625G recessed upward from a lower surface 6252. The support plate 625 may include a hole 625H formed through an upper surface 6251 and the lower surface 6252 thereof. The hole 625H may be formed in a central portion of the groove 625G. A diameter of the groove 625G may be greater than a diameter of the hole 625H. A friction member 6253 may be seated in the groove 625G, and may surround the hole 625H. A fastening member (not shown), such as a bolt, may be inserted into the hole 625H. Here, a head of the fastening member (not shown), such as a bolt, may be seated in the groove 625G, and may be surrounded by the friction member 6253.

A width W1 in the left-and-right direction of the support plate 625 may be greater than a width W2 in the left-and-right direction of the front holder 621 (see FIG. 37). Accordingly, a contact surface between the support plate 625 and the speaker 61 may be increased, allowing vibration of the speaker 61 to be more easily absorbed.

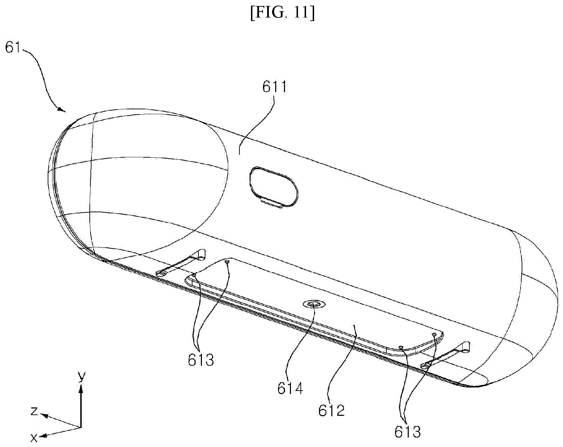

Referring to FIG. 11 together with FIGS. 9 and 10, the speaker 61 may include a speaker housing 611. The speaker housing 611 may define an outer appearance of the speaker 61. The speaker housing 611 may be coupled to the support plate 625. The speaker housing 611 may include a groove 612 on a bottom surface thereof. The groove 612 may have a shape and a size corresponding to the support plate 625. The speaker housing 611 may include a hole 614 or a recess 614 in the bottom surface thereof. The hole 614 may be formed in the groove 612, and may be aligned with the hole 625H of the support plate 625. A fastening member (not shown), such as a bolt, may be sequentially inserted into the hole 625H of the support plate 625 and the hole 614 or the recess 614 of the speaker 61, so as to couple the speaker 61 and the support plate 625.

The speaker 61 may include a foot member 613. The foot member 613 may be disposed in the groove 612 of the speaker 61. The foot member 613 may include a plurality of foot members 613. For example, the plurality of foot members 613 may include four foot members 613, and the four foot members 613 may be positioned at four corners of the groove 612, respectively. For example, the foot member 613 may be rubber. The foot member 613 may prevent slips and may absorb vibration of the speaker 61. The foot member 613 may be referred to as a rubber foot or a fourth sound absorbing member.

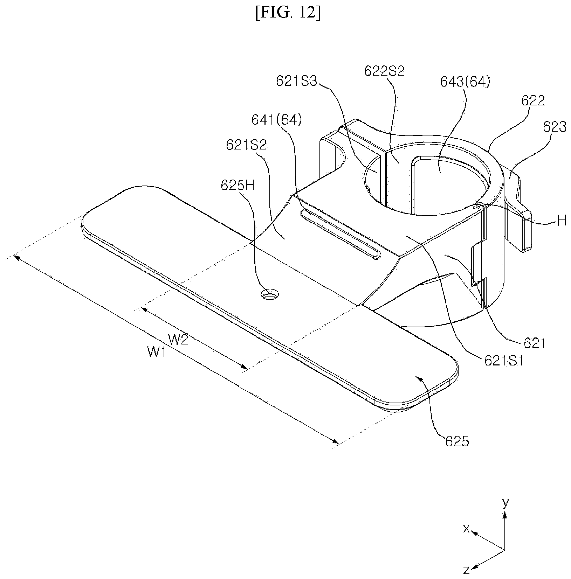

Referring to FIG. 12, the display device 1 may include a sound absorbing member 64. The sound absorbing member 64 may absorb vibration of the speaker 61. For example, the sound absorbing member 64 may be rubber.

A first sound absorbing member 641 may be disposed at the front holder 621. The first sound absorbing member 641 may be positioned on a seating surface 621S2 of the front holder 621. The first sound absorbing member 641 may be positioned on the seating surface 621S2 to be more adjacent to the upper surface 621S1 of the front holder 621 than the support plate 625. The first sound absorbing member 641 may have the shape of a bar elongated in the left-and-right direction. The first sound absorbing member 641 may come in contact with the speaker 61. The first sound absorbing member 641 may come in contact with the speaker 61 seated and coupled to the support plate 625. In this case, the first sound absorbing member 641 may absorb vibration of the speaker 61, and may prevent the speaker 61 from slipping and falling, thereby allowing the speaker 61 to be more firmly fixed or secured.

A second sound absorbing member 642 may be positioned on the inner surface 621S3 of the front holder 621. The second sound absorbing member 624 may be fixed to the inner surface 621S3 of the front holder 621, and may be positioned between the front holder 621 and the pole 30. The second sound absorbing member 624 may absorb vibration transmitted through the front holder 621. The second sound absorbing member 624 may increase a friction force between the fixing holder 62 and the pole 30, and may prevent the fixing holder 62 from slipping and falling.

A third sound absorbing member 643 may be positioned on the inner surface 622S of the rear holder 622. The third sound absorbing member 643 may be fixed to the inner surface 622S of the rear holder 622, and may be positioned between the rear holder 622 and the pole 30. The third sound absorbing member 643 may face the second sound absorbing member 624. The third sound absorbing member 643 may absorb vibration transmitted through the rear holder 622. The third sound absorbing member 643 may increase a friction force between the fixing holder 62 and the pole 30, and may prevent the fixing holder 62 from slipping and falling.

A fourth sound absorbing member 613 may be positioned between the speaker 61 and the support plate 625. For example, the fourth sound absorbing member 613 may be fixed to the speaker 61. Alternatively, the fourth sound absorbing member 613 may be fixed to the support plate 625. The fourth sound absorbing member 613 may come in contact with the speaker 61. In this case, the fourth sound absorbing member 613 may absorb vibration of the speaker 61, and may prevent the speaker 61 from slipping and falling, thereby increasing a fixing force between the speaker 61 and the support plate 625.

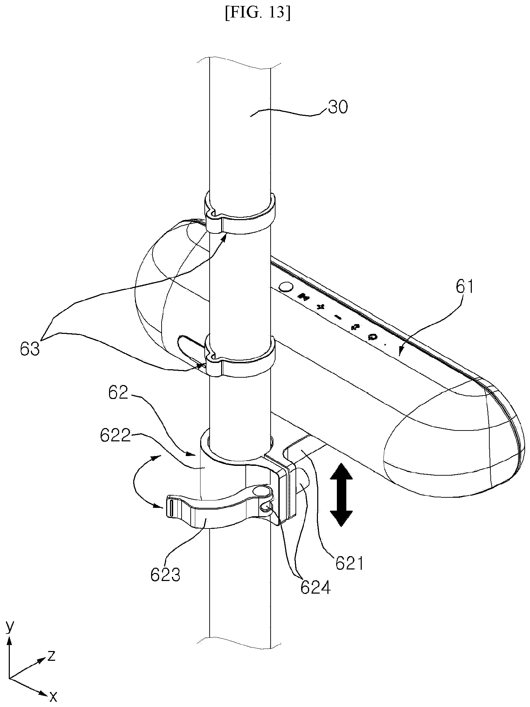

Referring to FIG. 13, the clamp 623 may be rotatable about the second pin 6242. The clamp 623 may allow a separation distance between the second end 6212 of the front holder 621 and the second end 6222 of the rear holder 622 to be adjusted. For example, the clamp 623 may be rotated about the second pin 6242 in a first rotation direction to press the rear holder 622 toward the front holder 621. In this case, the distance between the second end 6212 of the front holder 621 and the second end 6222 of the rear holder 622 may be reduced, and the fixing holder 62 may be fixed to a specific position on the pole 30. For example, when the clamp 623 is rotated about the second pin 6242 in a second rotation direction opposite to the first rotation direction, the distance between the second end 6212 of the front holder 621 and the second end 6222 of the rear holder 622 may be increased, allowing the fixing holder 62 to be moved in the longitudinal direction of the pole 30.

Referring to FIG 1, FIG. 2, and FIG. 14, the display device 1 may include a speaker assembly 70. The speaker assembly 70 may be coupled to the pole 30. The speaker assembly 70 may be coupled to the pole 30 under the head 10. The speaker assembly 70 may provide sound in a forward direction of the display device 1.

The speaker assembly 70 may include a speaker 71. The speaker may be coupled to a fixing holder 72 described hereinafter. The speaker 71 may be detachably coupled to the fixing holder 72 described hereinafter. The speaker 71 may convert an electrical audio signal into sound waves. The speaker 71 may be electrically connected to the display device 1 to be used. Alternatively, the speaker 71 may be used alone, independently of the display device 1. For example, the speaker 71 may be a companion speaker.

The speaker assembly 70 may include a fixing holder 72. The fixing holder may be coupled to the pole 30. The fixing holder 72 may be fixed to a specific position on the pole 30. The fixing holder 72 may support the speaker 71. The fixing holder 72 may allow the speaker 71 to be spaced apart from the surface.

The speaker assembly 70 may include a cable holder 73. The cable holder 73 may be coupled to the pole 30. The cable holder 73 may include a ring body 731 that surrounds an outer circumferential surface of the pole 30, and a bending portion 732 formed in such a manner that at least a portion of the ring body 731 is bent. The ring body 731 may have a ring shape, so that the pole 30 may be inserted therein. The ring body 731 may have an opened circle shape. An opening of the ring body 731 may be disposed opposite the bending portion 732 with respect to the pole 30. For example, the opening of the ring body 731 may be open toward the front, and the bending portion 732 may protrude toward the rear. At least a portion of the ring body 731 may be bent in a radial direction of the pole 30 to form the bending portion 732. At least a portion of the ring body 731 may be pressed in the radial direction of the pole 30 to form the bending portion 732. The bending portion 732 may protrude in the radial direction of the pole 30. The bending portion 732 and the outer circumferential surface of the pole 30, when combined together, may form a hole, and a cable may be disposed in the hole between the bending portion 732 and the pole 30. The ring body 731 and the bending portion 732 may be formed as one body.

For example, the cable holder 73 may be made of a plastic material having elasticity. The cable holder 73 may be coupled to or removed from the pole 30 through the opening of the ring body 731.

The cable holder 73 may include a plurality of cable holders 73. The plurality of cable holders 73 may be spaced apart from each other along a longitudinal direction of the pole 30. The cable holder 73 may be coupled to the pole 30, above the fixing holder 72. The cable holder 73 may be coupled to the pole 30, below the fixing holder 72. Part of the plurality of cable holders 73 may be positioned above the fixing holder 72, and the remaining part of the plurality of cable holders 73 may be positioned below the fixing holder 72.

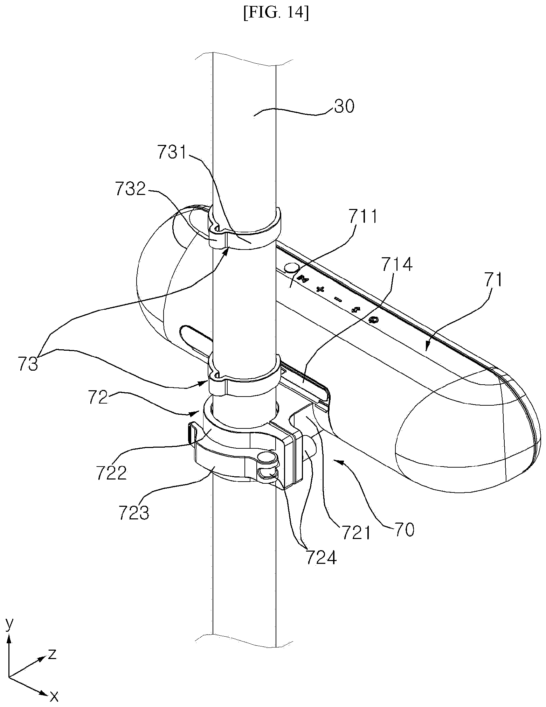

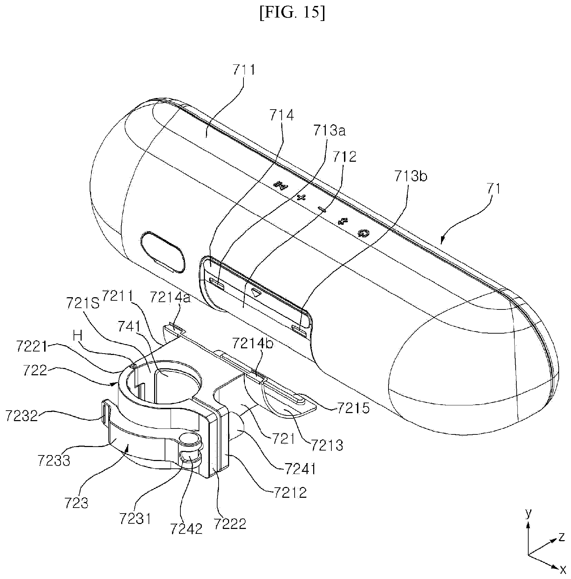

Referring to FIG. 15 together with FIG. 14, the fixing holder 72 may include a front holder 721. The front holder 721 may surround a portion of an outer circumference of the pole 30. An inner surface 721S of the front holder 721 may come in contact with the outer circumference of the pole 30. The front holder 721 may extend in a direction perpendicular to the longitudinal direction of the pole 30. The front holder 721 may extend along the radial direction of the pole 30, and may extend forward of the display panel 11.

The fixing holder 72 may include a seating portion 7213. The seating portion 7213 may be a surface that the front holder 721 faces the front. The seating portion 7213 may be referred to as a seating surface 7213. The speaker 71 may be seated on the seating portion 7213. The speaker 71 may be coupled to the seating portion 7213, which may come in contact with the speaker 71. The seating portion 7213 may be formed as a curved surface. The seating portion 7213 may be formed as a curved surface that is convex downward. The seating surface 621 S3 may have a shape corresponding to a shape of the speaker 61 in contact with the seating surface 621S3.

The fixing holder 72 may include a rear holder 722. The rear holder 722 may surround a portion of the outer circumference of the pole 30. An inner surface 722S of the rear holder 722 may come in contact with the outer circumference of the pole 30. The rear holder 722 may extend in a direction perpendicular to the longitudinal direction of the pole 30. The rear holder 722 may extend along the radial direction of the pole 30, and may extend rearward of the display panel 11. The rear holder 722 may be coupled to the front holder 721.

A first end 7221 of the rear holder 722 may face a first end 7211 of the front holder 721. The first end 7221 of the rear holder 722 and the first end 7211 of the front holder 721 may be hingedly coupled to each other. The front holder 721 and the rear holder 722 may be hingedly coupled by a hinge pin H. For example, the first end 7211 of the front holder 721 may be provided with a groove, the first end 7221 of the rear holder 722 may be provided with a protrusion engaged with the groove of the first end 7211 of the front holder 721, and the hinge pin H may pass through the first end 7211 of the front holder 721 and the first end 7221 of the rear holder 722.

A second end 7222 of the rear holder 722 may face a second end 7212 of the front holder 721. The second end 7222 of the rear holder 722 and the second end 7212 of the front holder 721 may extend in the radial direction of the pole 30. The second end 7222 of the rear holder 722 and the second end 7212 of the front holder 721 may extend in the left-and-right direction. The second end 7222 of the rear holder 722 and the second end 7212 of the front holder 721 may be spaced apart from each other by a predetermined distance. The second end 7222 of the rear holder 722 and the second end 7212 of the front holder 721 may be coupled via a pin member 724 described later. The second end 7222 of the rear holder 722 and the second end 7212 of the front holder 721 may each have a hole through which the pin member 724 passes.

The front holder 721 and the rear holder 722, when coupled together, may form an insertion hole, and the pole 30 may be inserted into the insertion hole. The insertion hole may be surrounded by the inner surface 721S of the front holder 721 and the inner surface 722S of the rear holder 722.

The fixing holder 72 may include a pin member 724. The pin member 724 may allow the second end 7222 of the rear holder 722 and the second end 7212 of the front holder 721 to be coupled to each other. The pin member 724 may pass through the second end 7222 of the rear holder 722 and the second end 7212 of the front holder 721. The pin member 724 may include a first pin 7241 positioned on the front holder 721 side, a second pin 7242 positioned on the rear holder 722 side, and a third pin (not shown) connecting the first pin 7241 and the second pin 7242. The third pin (not shown) may pass through the second end 7222 of the rear holder 722 and the second end 7212 of the front holder 721. The first pin 7241 and the third pin (not shown) may extend in the front-and-rear direction. Here, a diameter of the first pin 7241 may be greater than a diameter of the third pin (not shown). A diameter of the second pin 7241 may be greater than a diameter of a hole formed in the second end 7212 of the front holder 721. The diameter of the third pin (not shown) may be equal to or less than the diameter of the hole formed in the second end 7212 of the front holder 721. The diameter of the third pin (not shown) may be equal to or less than a hole formed in the second end 7222 of the rear holder 722. The second pin 7242 may extend in a direction intersecting the extension direction of the first pin 7141. The second pin 7242 may extend in the up-and-down direction. A longitudinal length of the second pin 7242 may be greater than the diameter of the hole formed in the second end 7212 of the front holder 721. The longitudinal length of the second pin 7242 may be greater than the diameter of the hole formed in the second end 7222 of the rear holder 722. A longitudinal length of the third pin (not shown) may be greater than the sum of widths of the second end 7212 of the front holder 721 and a width of the second end 7222 of the rear holder 722.

The fixing holder 72 may include a clamp 723. The clamp 723 may be positioned on the rear holder 722 side. A first end 7231 of the clamp 723 may be coupled to the pin member 724. The first end 7231 of the clamp 723 may be coupled to the second pin 7242 of the pin member 724. The first end 7231 of the clamp 723 may be rotatably coupled about the second pin 7242. A second end 7232 of the clamp 723 may be a free end. A body 7233 between the first end 7231 and the second end 7232 of the clamp 723 may have a shape corresponding to the rear holder 722. For example, the body 7233 may have a rounded (or curved) shape convex rearward, and may contact and be fitted onto the rear holder 722.

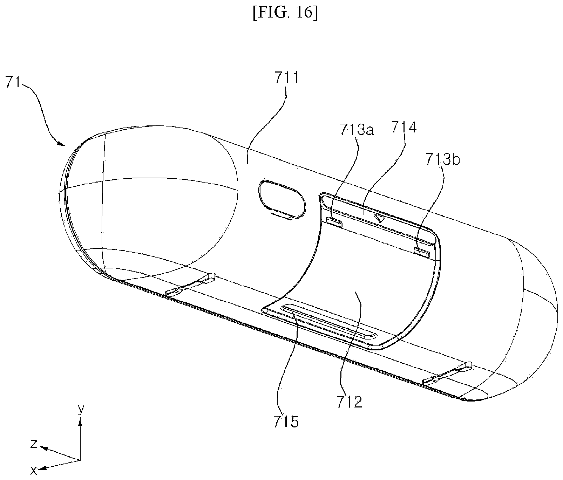

Referring to FIG. 16, the fixing holder 72 may be hook-coupled with the speaker 71. The front holder 721 may be provided with a hook (7214a, 7214b). The hook (7214a, 7214b) may be formed by protruding forward from the seating portion 7213. The hook (7214a, 7214b) may protrude forward from an upper end of the seating portion 7213. The hook (7214a, 7214b) may include a plurality of hooks 7214a and 7214b spaced apart from each other. For example, the hook (7214a, 7214b) may include a first hook 7214a and a second hook 7214b. The first hook 7214a and the second hook 7214b may be spaced apart from each other in the left-and-right direction. The first hook 7214a and the sconed hook 7214b may be inserted into and coupled to a first hook recess 713a and a second hook recess 713b, respectively.

The fixing holder 72 may include a fixing bar 7251. The fixing bar 7215 may protrude upward from the seating portion 7213. The fixing bar 7215 may have the shape of a bar elongated in the left-and-right direction. The fixing bar 7215 may be inserted into a fixing groove 715 of the speaker 71.

The speaker 71 may include a speaker housing 711. The speaker housing 711 may define an outer appearance of the speaker 71. The speaker housing 711 may be coupled to the front holder 721. The speaker 71 may include a coupling groove 712 formed on the speaker housing 711. The coupling groove 712 may be formed on a bottom surface and a rear surface of the speaker housing 711. The seating portion 7213 of the fixing holder 72 may be inserted into the coupling groove 712. The coupling groove 712 may have a shape corresponding to the seating portion 7213.

The speaker 71 may include a hook recess (713a, 713b). The hook recess (713a, 713b) may be formed in the speaker housing 711. The hook recess (713a, 713b) may be formed in the coupling groove 712. The hook recess (713a, 713b) may be formed at an upper end of the coupling groove 712. The hook (7214a, 7214b) may be inserted into the hook recess (713a, 713b). The hook recess (713a, 713b) may have therein an engaging portion on which the hook (7214a, 7214b) is hooked, and the speaker 71 may be coupled to the fixing holder 72 when the hook (7214a, 7214b) is hooked into the hook recess (713a, 713b). The hook recess (713a, 713b) may include a plurality of hook recesses 713a and 713b. For example, the hook recess (713a, 713b) may include a first hook recess 713a and a second hook recess 713b spaced apart from each other. The first and second hook recesses 713a and 713b may be spaced apart from each other in the left-and-right direction, and may be aligned with the hook 7214a, 7214b in the front-and-rear direction.

The speaker 71 may include a button 714. The button 714 may be positioned above the hook recess (713a, 713b). The button 714 may be positioned at the upper end of the coupling groove 712. The button 714 may be operated in conjunction with the hook recess (713a, 713b) and the hook (7214a, 7214b. When the button 714 is pressed while the speaker 71 is fixed to the fixing holder 72, the speaker 71 may be separated from the fixing holder 72.

The speaker 71 may include a fixing groove 715. The fixing groove 715 may be formed on the coupling groove 712. The fixing groove 715 may be formed at a lower end of the coupling groove 712. The fixing bar 7215 of the fixing holder 72 may be inserted into the coupling groove 712. The fixing bar 7215 may come in contact with the speaker 71. The fixing bar 7215 may be made of a material that absorbs vibration of the speaker 71. For example, the fixing bar 7215 may be rubber. The fixing bar 7215 may increase a fixing force between the speaker 71 and the fixing holder 72, and may absorb vibration of the speaker 71. The fixing bar 7215 may be referred to as a fifth sound absorbing member 7215.

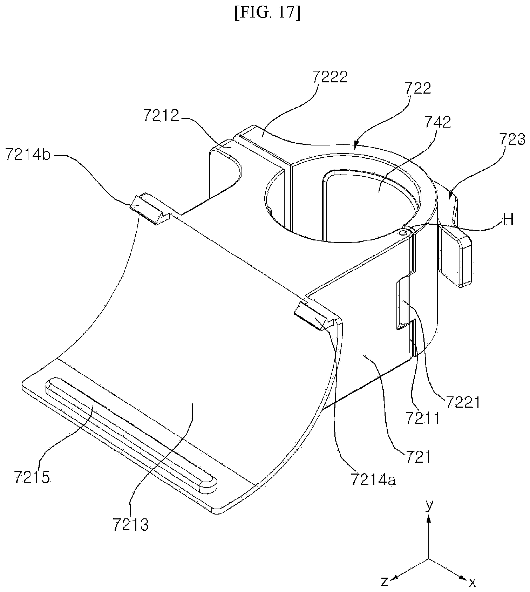

Referring to FIG. 15 and FIG. 17, the display device 1 may include a sound absorbing member 74. The sound absorbing member 74 may absorb vibration of the speaker 71. For example, the sound absorbing member 74 may be rubber.

The fifth sound absorbing member 7215 may be disposed at the front holder 721. The fifth sound absorbing member 7215 may be positioned on the seating portion 7213 of the front holder 721. The fifth sound absorbing member 7215 may have the shape of a bar elongated in the left-and-right direction. The fifth sound absorbing member 7215 may come in contact with the speaker 71. The fifth sound absorbing member 7215 may absorb vibration of the speaker 71, and may prevent the speaker 71 from slipping and falling, thereby allowing the speaker 71 to be more firmly fixed or secured.

A sixth sound absorbing member 741 may be positioned on the inner surface 7215 of the front holder 721. The sixth sound absorbing member 741 may be fixed to the inner surface 721S of the front holder 721, and may be positioned between the front holder 721 and the pole 30. The sixth sound absorbing member 741 may absorb vibration of the speaker 71 transmitted through the front holder 721. The sixth sound absorbing member 741 may increase a friction force between the fixing holder 72 and the pole 30, and may prevent the fixing holder 72 from slipping and falling.

A seventh sound absorbing member 742 may be positioned on the inner surface 722S of the rear holder 722. The seventh sound absorbing member 742 may be fixed to the inner surface 722S of the rear holder 722, and may be positioned between the rear holder 722 and the pole 30. The seventh sound absorbing member 742 may face the sixth sound absorbing member 741. The seventh sound absorbing member 742 may absorb vibration of the speaker 71 transmitted through the rear holder 722. The seventh sound absorbing member 742 may increase a friction force between the fixing holder 72 and the pole 30, and may prevent the fixing holder 72 from slipping and falling.

The fourth sound absorbing member 613 may be positioned between the speaker 61 and the support plate 625. For example, the fourth sound absorbing member 613 may be fixed to the speaker 61. Alternatively, the fourth sound absorbing member 613 may be fixed to the support plate 625. The fourth sound absorbing member 613 may come in contact with the speaker 61. In this case, the fourth sound absorbing member 613 may absorb vibration of the speaker 61, and may prevent the speaker 61 from slipping and falling, thereby increasing a fixing force between the speaker 61 and the support plate 625.

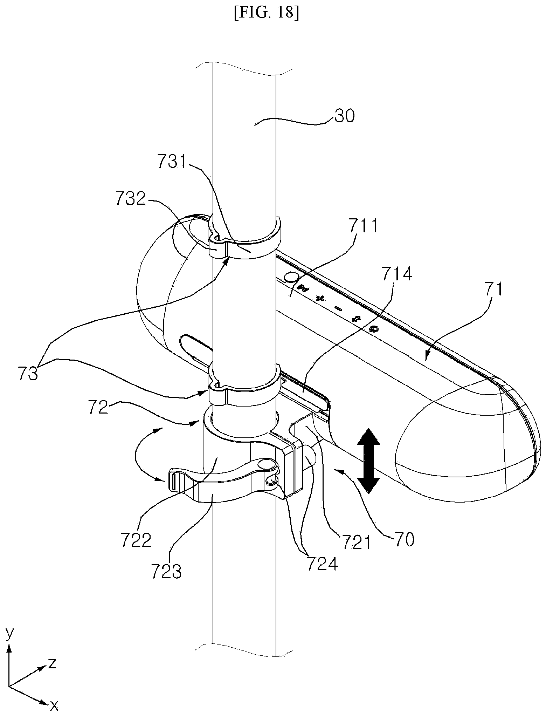

Referring to FIG. 14 and FIG. 18, the clamp 623 may be rotatable about the second pin 7242. The clamp 723 may allow a separation distance between the second end 7212 of the front holder 721 and the second end 7222 of the rear holder 722 to be adjusted. For example, the clamp 723 may be rotated about the second pin 7242 in a first rotation direction to press the rear holder 722 toward the front holder 721. In this case, the distance between the second end 7212 of the front holder 721 and the second end 7222 of the rear holder 722 may be reduced, and the fixing holder 72 may be fixed to a specific position on the pole 30. For example, when the clamp 723 is rotated about the second pin 7242 in a second rotation direction opposite to the first rotation direction, the distance between the second end 7212 of the front holder 721 and the second end 7222 of the rear holder 722 may be increased, allowing the fixing holder 72 to be moved in the longitudinal direction of the pole 30.

Referring to FIGS. 1 to 18, a speaker assembly according to an aspect of the present disclosure may include: a speaker 61, 71; a fixing holder 62, 72 coupled to a pole 30 which is elongated, configured to be movable along a longitudinal direction of the pole 30, and which fixes the speaker 61, 71 to the pole 30, the fixing holder 62, 72 including a seating surface on which the speaker 61, 71 is seated; and a sound absorbing material 64, 74 positioned at the fixing holder 62, 72.

The speaker assembly may include a support plate 625 extending from the fixing holder 62 in a direction intersecting the longitudinal direction of the pole 30 and supporting the speaker 61, the fixing holder 62 may include: a front holder 621 coupled to the support plate 625; and a rear holder 622 coupled to the front holder 621, the seating surface 621S3 may connect an upper surface 621S1 of the front holder 621 and an upper surface 6251 of the support plate 625, the sound absorbing material 64 may include: a first sound absorbing member 641 which is positioned on the seating surface 621S3 of the front holder 621 and which is in contact with the speaker 61.

The support plate 625 may be elongated in a radial direction of the pole, and a length W1 of the support plate 625 may be greater than a length W2 of the seating surface 621S3 of the front holder 621 in contact with the support plate 625.

The front holder 621 and the rear holder 622 may be coupled to form a hole in which the pole 30 is inserted, the sound absorbing material 64 may include: a second sound absorbing member 642 fixed to an inner surface 621S1 of the front holder 621 which forms a portion of the hole; and a third sound absorbing member 643 fixed to an inner surface 622S of the rear holder 622 which forms a portion of the hole.

The speaker 61 may include: a speaker housing 611 forming an outer appearance of the speaker 61; a groove 612 which is recessed from one surface of the speaker housing 611 and into which the support plate 625 is inserted 625; and a foot member 613 fixed between the support plate 625 and one surface of the groove 612 and absorbing vibration of the speaker 61.

The speaker 61 may include a coupling recess 614 formed at the one surface of the groove 612 which faces the support plate 625, the support plate 625 may include a coupling hole 625H formed through the support plate 625 and aligned with the coupling recess 614, and the speaker 61 may be fixed to the support plate 625 by a fastening member which is inserted into the coupling recess 625H through the coupling hole 614.

The fixing holder 62 may include: a front holder 621 surrounding a portion of the pole 30 and including the seating surface 621S3; and a rear holder 622 surrounding a remaining portion of the pole 30, the rear holder 622 having one end 6221 hingedly coupled to one end 6211 of the front holder 621 and the other end 6222 coupled to the other end 6212 of the front holder 6212 by a pin member 624; and a clamp 623 positioned at the rear holder 622, the clamp 623 having one end 6231 rotatably coupled about the pin member 624 and the other end 6232 formed as a free end, and the clamp 623 may be rotated to adjust a gap between the other end 6212 of the front holder 621 and the other end 6222 of the rear holder 622.

The speaker 71 may include: a speaker housing 711 forming an outer appearance of the speaker 71; a groove 712 recessed from one surface of the speaker housing 711, the groove 712 in contact with the seating surface 7213 of the fixing holder 712; a hook recess 713a, 713b formed at the groove 712; and a fixing groove 715 formed at the groove 712 and spaced apart from the hook recess 713a, 713b, the fixing holder 72 may include a hook 7214a, 7214b protruding from the seating surface 7213 and coupled to the hook recess 713a, 713b, and the sound absorbing material 74 may include a first sound absorbing member 7215 protruding from the seating surface 7213 and inserted into the fixing groove 715.

The fixing holder 62 may include: a front holder 721 facing the speaker 71 and including the seating surface 7213; and a rear holder 722 coupled to the front holder 721, the rear holder 722 coupled to the front holder 721 to form a hole into which the pole 30 is inserted, and the sound absorbing material 74 may include: a second sound absorbing member 741 fixed to an inner surface of the front holder 721; and a third sound absorbing member 741 fixed to an inner surface of the rear holder 722.

A display device according to an aspect of the present disclosure includes: a head 10 including a display panel 11; a stand 20, 30, 50, 40 supporting the head 10, the stand 20, 30, 50, 40 including a base 20, a pole 30 elongated from the base 20, and a support arm 50 connecting the pole 30 and the head 10; and a speaker assembly 60, 70 coupled to the pole 30, the speaker assembly 60, 70 may include: a speaker 61, 71 outputting sound in a forward direction of the display panel 11; a fixing holder 62, 72 which is coupled to the pole 30 and which fixes the speaker 61, 71 to a specific position along a longitudinal direction of the pole 30, the fixing holder 62, 72 including a seating surface 621S3, 7213 on which the speaker 61, 71 is seated; and a sound absorbing material 64, 74 positioned at the fixing holder 62, 72.

The speaker assembly 60 may include: a support plate 625 extending from the fixing holder 62 in a direction intersecting the longitudinal direction of the pole 30 and supporting the speaker 61, the fixing holder 62 may include: a front holder 621 surrounding a portion of the pole 30 and couple to the support plate 625; and a rea holder 622 surrounding a remaining portion of the pole 30 and coupled to the front holder 621, the seating surface 621S3 may connect an upper surface 621S1 of the front holder 621 and an upper surface 621S1 of the support plate 625, the sound absorbing material 64 may include: a first sound absorbing member 641 fixed to the seating surface 621S3 of the front holder 621 and in contact with the speaker 61; a second sound absorbing member 642 fixed to the front holder 621 and positioned between the front holder 621 and the pole 30; and a third sound absorbing member 643 fixed to the rear holder 622 and positioned between the rear holder 622 and the pole 30.

The speaker assembly 60 may include a clamp 623 rotatably coupled to the fixing holder 62, one end 6212 of the front holder 621 and one end 6222 of the rear holder 622 may be coupled by a pin member 624 while facing each other, and the clamp 623 may be positioned at the rear holder 622, may be rotatably coupled to the pin member 624, and may be rotated to adjust a gap between the one end 6212 of the front holder 621 and the one end 6222 of the rear holder 622.

The speaker 61 may include: a speaker housing 611 forming an outer appearance of the speaker 61; a groove 612 which is recessed from one surface of the speaker housing 611 and into which the support plate 625 is inserted; and a foot member 613 fixed between the support plate 625 and one surface of the groove 612 and absorbing vibration of the speaker 61.

The display device 1 may include: a cable holder 63, 73 coupled to the pole 30, the cable holder 62, 73 may include: a ring body 631, 731 surrounding at least a portion of an outer circumferential surface of the pole 30; and a bending portion 632, 732 formed by bending a portion of the ring body 631, 731, spaced apart from the outer circumferential surface of the pole 30, and in which a cable is disposed.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the disclosure should be determined by reasonable interpretation of the appended claims, and all changes coming within the equivalency range of the disclosure are intended to be embraced in the scope of the disclosure.

## Claims

1. A speaker assembly comprising:
a speaker;
a fixing holder coupled to a pole which is elongated, which is movable along a longitudinal direction of the pole, and which fixes the speaker to the pole, the fixing holder including a seating surface on which the speaker is seated; and
a sound absorbing material positioned at the fixing holder.

2. The speaker assembly of claim 1, further comprising a support plate extending from the fixing holder in a direction intersecting the longitudinal direction of the pole and supporting the speaker,
wherein the fixing holder comprises:
a front holder coupled to the support plate; and
a rear holder coupled to the front holder,
wherein the seating surface connects an upper surface of the front holder and an upper surface of the support plate, and
wherein the sound absorbing material comprises a first sound absorbing material which is positioned on the seating surface of the front holder and which is in contact with the speaker.

3. The speaker assembly of claim 2, wherein the support plate is elongated in a radial direction of the pole, and
wherein a length of the support plate is greater than a length of the seating surface of the front holder in contact with the support plate.

4. The speaker assembly of claim 3, wherein the front holder and the rear holder are coupled to form a hole into which the pole is inserted,
wherein the sound absorbing material comprises:
a second sound absorbing material fixed to an inner surface of the front holder which forms a portion of the hole; and
a third sound absorbing material fixed to an inner surface of the rear holder which forms a portion of the hole.

5. The speaker assembly of claim 2, wherein the speaker comprises:
a speaker housing forming an outer appearance of the speaker;
a groove which is recessed from one surface of the speaker housing and into which the support plate is inserted; and
a foot member fixed between the support plate and one surface of the groove and absorbing vibration of the speaker.

6. The speaker assembly of claim 5, wherein the speaker comprises a coupling recess formed at the one surface of the groove which faces the support plate,
wherein the support plate comprises a coupling hole formed through the support plate and aligned with the coupling recess, and
wherein the speaker is fixed is to the support plate by a fastening member which is inserted into the coupling recess through the coupling hole.

7. The speaker assembly of claim 2, wherein the fixing holder comprises:
a front holder surrounding a portion of the pole and including the seating surface; and
a rear holder surrounding a remaining portion of the pole, the rear holder having one end hingedly coupled to one end of the front holder and the other end coupled to the other end of the front holder by a pin member; and
a clamp positioned at the rear holder, the clamp having one end rotatably coupled about the pin member and the other end formed as a free end, and
wherein the clamp is rotated to adjust a gap between the other end of the front holder and the other end of the rear holder.

8. The speaker assembly of claim 1, wherein the speaker comprises:
a speaker housing forming an outer appearance of the speaker;
a groove recessed from one surface of the speaker housing, the groove in contact with the seating surface of the fixing holder;
a hook recess formed at the groove; and
a fixing groove formed at the groove and spaced apart from the hook recess,
wherein the fixing holder comprises a hook protruding from the seating surface and coupled to the hook recess, and
wherein the sound absorbing material comprises a first sound absorbing material protruding from the seating surface and inserted into the fixing groove.

9. The speaker assembly of claim 8, wherein the fixing holder comprises:
a front holder facing the speaker and including the seating surface; and
a rear holder coupled to the front holder, the rear holder coupled to the front holder to form a hole into which the pole is inserted, and
wherein the sound absorbing material comprises:
a second sound absorbing material fixed to an inner surface of the front holder; and
a third sound absorbing material fixed to an inner surface of the rear holder.

10. A display device comprising:
a head including a display panel;
a stand supporting the head, the stand including a base, a pole elongated from the base, and a support arm connecting the pole and the head; and
a speaker assembly coupled to the pole,
wherein the speaker assembly comprises:
a speaker outputting sound in a forward direction of the display panel;
a fixing holder which is coupled to the pole and which fixes the speaker to a specific position along a longitudinal direction of the pole, the fixing holder including a seating surface on which the speaker is seated; and
a sound absorbing material positioned at the fixing holder.

11. The display device of claim 10, wherein the speaker assembly comprises:
a support plate extending from the fixing holder in a direction intersecting the longitudinal direction of the pole and supporting the speaker,
wherein the fixing holder comprises:
a front holder surrounding a portion of the pole and coupled the support plate; and
a rear holder surrounding a remaining portion of the pole and coupled to the front holder,
wherein the seating surface connects an upper surface of the front holder and an upper surface of the support plate,
wherein the sound absorbing material comprises:
a first sound absorbing material fixed to the seating surface of the front holder and in contact with the speaker;
a second sound absorbing material fixed to the front holder and positioned between the front holder and the pole; and
a third sound absorbing material fixed to the rear holder and positioned between the rear holder and the pole.

12. The display device of claim 11, wherein the speaker assembly comprises a clamp rotatably coupled to the fixing holder,
wherein one end of the front holder and one end of the rear holder are coupled by a pin member while facing each other, and
wherein the clamp is positioned at the rear holder, is rotatably coupled to the pin member, and is rotated to adjust a gap between the one end of the front holder and the one end of the rear holder.

13. The display device of claim 11, wherein the speaker comprises:
a speaker housing forming an outer appearance of the speaker;
a groove which is recessed from one surface of the speaker housing and into which the support plate is inserted; and
a foot member fixed between the support plate and one surface of the groove and absorbing vibration of the speaker.

14. The display device of claim 10, further comprising a cable holder coupled to the pole, wherein the cable holder comprises:
a ring body surrounding at least a portion of an outer circumferential surface of the pole; and
a bending portion formed by bending a portion of the ring body, spaced apart from the outer circumferential surface of the pole, and in which a cable is disposed.
